Europäisches Patentamt

European Patent Office

Office européen des brevets

(11) Publication number: **0 113 997**
**B1**

# EUROPEAN PATENT SPECIFICATION

(45) Date of publication of patent specification: **24.02.88**

(21) Application number: **83307806.6**

(22) Date of filing: **21.12.83**

(51) Int. Cl.⁴: **B 23 B 9/00**

(54) Multi-spindle lathes.

(30) Priority: **12.01.83 GB 8300694**

(43) Date of publication of application:
**25.07.84 Bulletin 84/30**

(45) Publication of the grant of the patent:
**24.02.88 Bulletin 88/08**

(84) Designated Contracting States:
**DE FR GB IT**

(56) References cited:
**GB-A-1 277 076**
**GB-A-1 486 422**

(73) Proprietor: **Wickman Bennett Machine Tool
Company Limited
Banner Lane
Coventry, CV4 9GE (GB)**

(72) Inventor: **Bill, Eric Graham
134 Widney Manor Road
Solihull West Midlands B91 3JJ (GB)**
Inventor: **Marshall, Struan Robertson Lockhart
55 Woodcote Avenue
Kenilworth Warwickshire (GB)**

(74) Representative: **Carpenter, David et al
MARKS & CLERK Alpha Tower Suffolk Street
Queensway
Birmingham B1 1TT (GB)**

Courier Press, Leamington Spa, England.

**Description**

This invention relates to multi-spindle latches wherein there are a number of work spindles carried in an indexable drum.

Conventional multi-spindle lathes have a drive mechanism including a motor drive for the work spindles, usually situated at the end of the machine remote from the drum. This location for the motor drive and its associated apparatus is most convenient in many machines since other parts of the machine, and in particular those areas around the indexing drum, are occupied with other mechanisms concerned with tooling and other functions of the machine.

In multi-spindle machines the spindles are driven through appropriate gearing from the motor drive and there is usually included means for varying or changing the speed of rotation of the spindles. In some machines there is provision for stopping one or more of the spindles while the others continue to rotate, this being achieved through clutches. It is not in general however possible to arrange for the spindles to be driven at different speeds from one another.

This facility would be very useful in that it provides greater versatility of the machine, making it possible to carry out quite different types of machining operations at the respective spindles. It has been proposed to drive spindles individually, and usually temporarily, by disengaging the normal drive, by means of a clutch and then driving the spindle from a necessarily small motor mounted on the indexable drum. This may only be sufficient to bring the spindle into a predetermined position, then stopping so that an operation such as cross-drilling may be carried out.

It may however be inconvenient if the relative orientation of the respective spindles is lost, as is the case with individual drives, as referred to and also when a clutch is released to allow one spindle to stop.

U.S. Patent Specification 3339440 shows an arrangement for achieving independent driving of the work spindles. In 3339440 each spindle is driven by its own motor, all of the motors being housed within the indexable drum. Such a proposal is unpractical in that by virtue of the increase in size and complexity of the indexable drum which is necessitated by the positioning of the motors and drives in the drum, the accuracy of workpiece positioning during indexing of the drum must suffer. Clearly when a workpiece is moved, by indexing of the drum, from one station to the next then it is essential that the workpiece new position is accurately and repeatably achieved so that tools at the new position can operate as intended on the workpiece. To achieve such accuracy it is usual to mount the drum for indexing in a relative massive housing to which the drum is clamped during machining of the workpieces. The increased drum size of the arrangement shown in 3339440 appears to necessitate a mounting of the drum on a central shaft for indexing but the specification is silent as to the means whereby accurate indexing is achieved. It is believed that the required degree of accuracy could not be achieved with the arrangement shown in 3339440.

The most effective use of a multi-spindle lathe normally involves operations carried out at the respective spindle stations which are of approximately equal time span, in order that parts of the machine are not left idle while some other operation is completed.

This is within the skill of the setter or operations programmer. Multi-spindle lathe control lends itself to numerical control principles.

It is an object of the invention to provide an improved multi-spindle lathe which has a plurality of rotatable work spindles which are capable of independent rotation thus providing a high order of versatility for the machine.

In accordance with the invention there is provided a multi-spindle lathe having an indexable drum, a plurality of work spindles rotatably mounted in the drum, and independent drive means, including a drive motor, for each of the spindles, the drive motors being located at the opposite end of the lathe from the rotatable drum and being connected to the respective spindles through independent drive mechanisms.

Preferably the drive mechanisms include concentric drive shafts spanning the space between the drum and a drive housing at said opposite end of the machine.

The invention will now be described by way of example with reference to the accompanying drawings in which;

Figure 1 is a diagrammatic side elevational view with parts omitted for clarity, of a multi-spindle lathe;

Figure 2 is an end view of the lathe of Figure 1 with the drive housing cover removed to show drive mechanisms for respective spindles of the lathe;

Figure 3 is a cross-sectional view of the same end of the lathe;

Figure 4 is a cross-sectional of the other end of the lathe showing the indexable drum and spindles mounted therein; and

Figure 5 is a view of the tooling arrangement of the lathe.

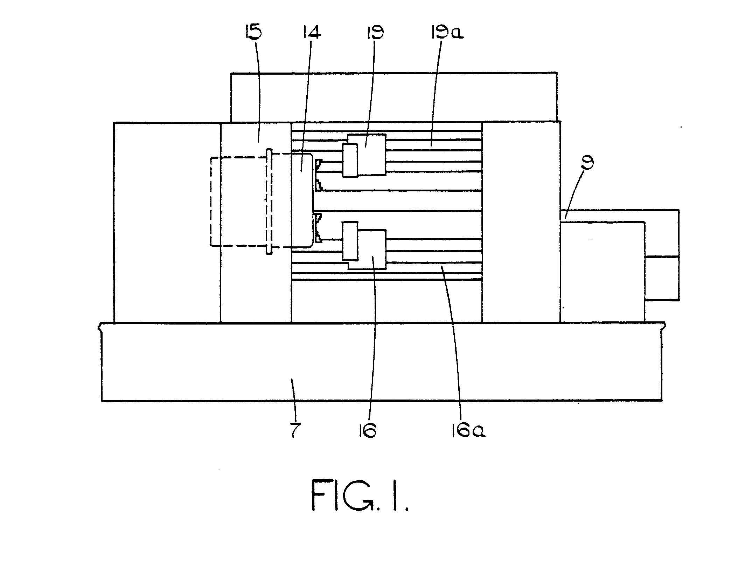

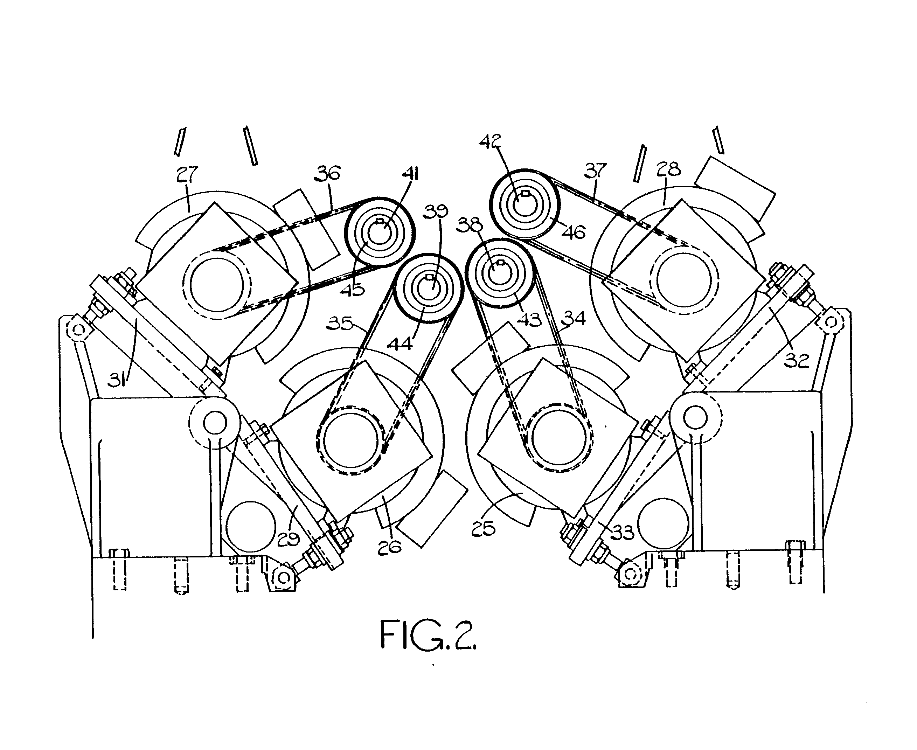

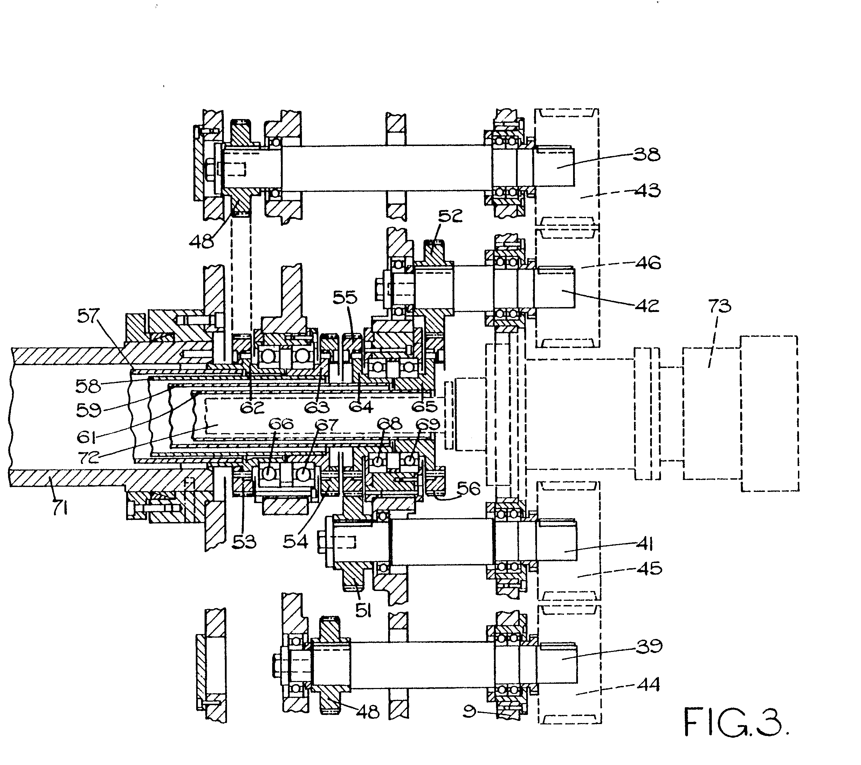

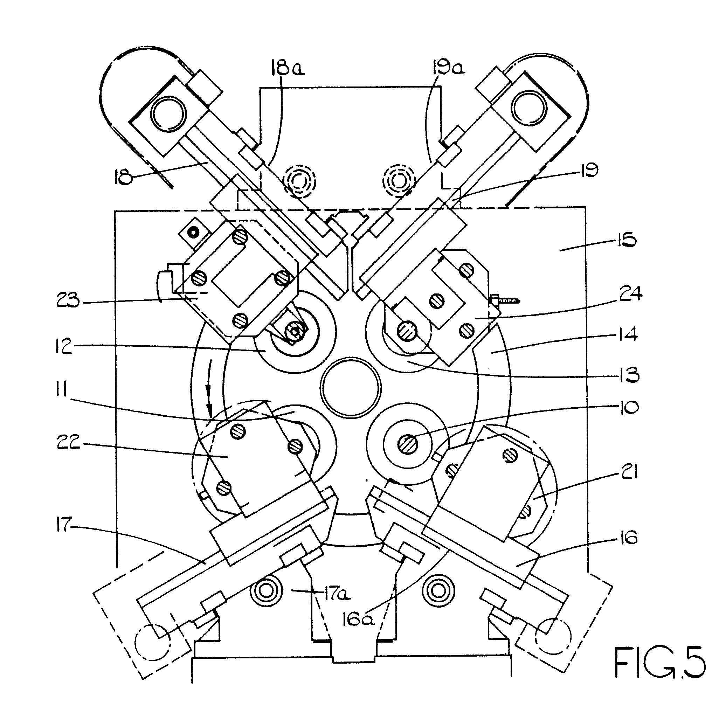

The lathe shown in the drawings is a multi-spindle lathe having four work spindles identified at 10, 11, 12 and 13 respectively. The work spindles are mounted in an indexable drum 14 which is carried in a drum housing 15. A drive housing 9 at the other end of the machine carries the gearing system and drive mechanisms shown in Figures 2 and 3. The drum housing 15 and drive housing 9 are mounted on a common base 7 of the machine. In the space between the two housings are tooling arrangements indicated in Figures 1 and 5 including slides 16, 17, 18 and 19 each of which in this example carries a turret 21, 22, 23, 24. Each of the slides is mounted on a further slide (indicated by suffix a) running parallel to the workspindles and each slide is driven by separate feed drive motors through associated ball screw mechanisms. The turrets are of conventional kind and are adapted to carry tooling for engagement with workpieces carried in the respective spindles. The drum 14 is indexable to bring the respective spindles into appropriate positions for machining operations to be carried out.

The machine is preferably numerically controlled so that indexing and machining operations are carried out in pre-chosen sequence. Typically such operations as profile turning, screw cutting etc. can be easily carried out.

The spindles are independently rotatable in the drum 14 in a manner which will be described. To drive the spindles there are respective drive motors shown in Figure 2 and identified by numerals 25, 26, 27 and 28 respectively. The motors are mounted on respective adjusting brackets 29, 31, 32, 33 by means of which the position of the motors can be adjusted to apply correct tension to respective drive belts 34, 35, 36, 37. The belts are engaged on pulleys carried by the driving spindles of the respective motors 25, 26, 27, 28 as seen in Figure 2. The drive belts 34, 35, 36, 37 engage on pulleys carried by respective shafts 38, 39, 41, 42. The shafts are mounted in the drive housing of the machine and their relationship is shown in Figure 2. However in Figure 3 the shafts are differently positioned for clarity. Each shaft carries its pulley 43, 44, 45, 46 on which runs the respective belt.

Each shaft 38, 39, 41, 42 is mounted in appropriate bearing structures in the drive housing 9 and carries at its end remote from its pulley a gear 48, 49, 51, 52. As can be seen from Figure 3 the shafts are of different lengths so that the gears 48, 49, 51, 52 occupy respective positions within the drive housing 9 offset from one another. The longest shaft is the shaft 38 and the shortest is the shaft 42. In this construction all the gears 48, 49, 51, 52 are of the same size. Moreover each such gear meshes with gears of the same size 53, 54, 55, 56, but differing from gears 48, 49, 51, 52.

Each such gear 53, 54, 55, 56 is mounted on a respective tubular drive shaft 57, 58, 59, 61. The four shafts 57, 58, 59, 61 are concentric but of differing lengths so that the respective gears 53, 54, 55, 56 can be connected to protruding ends of the concentric assembly of tubes. Each gear 53, 54, 55, 56 is mounted by way of a mounting ring 62, 63, 64, 65 carried in respective bearings 66, 67, 68, 69. These bearings therefore serve as supports in the driving housing 9 for the respective concentric shafts 57, 58, 59, 61. The mounting rings may be secured to their respective tubes by welding.

The drive housing has connected to its end presented towards the drum housing a shroud tube 71 which surrounds the concentric drive shafts 57, 58, 59, 61.

Within the innermost of these shafts 61 there is shown a further tube 72 which carries electrical wiring and/or hydraulic tubing for transmitting control from one end of the machine to the other.

An assembly 73 is shown in Figure 3 whereby such control is brought to the interior of the tube 72.

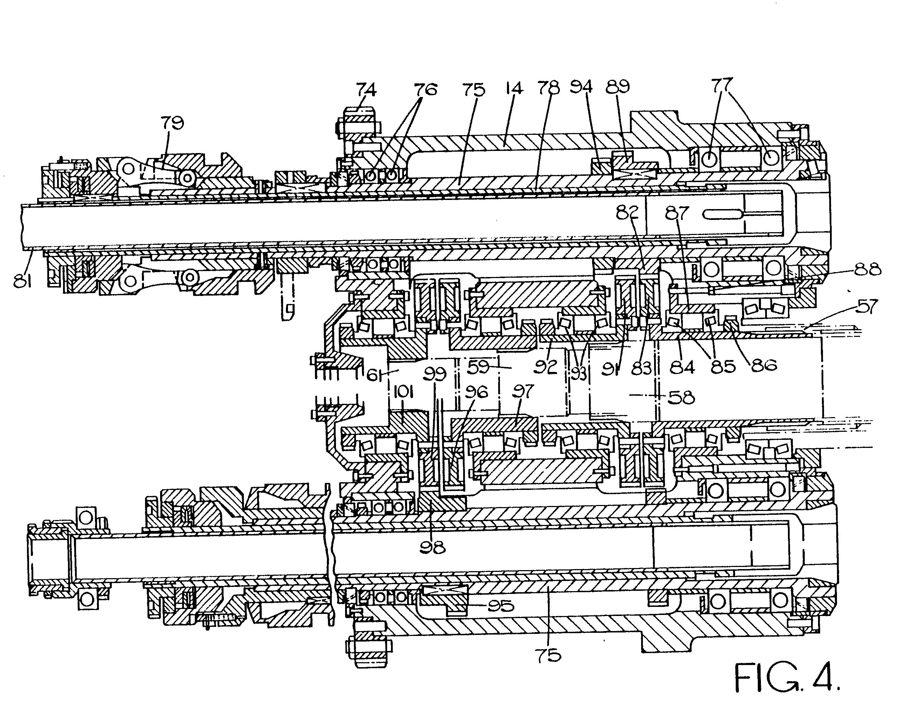

At the other end of the machine the indexable drum 14 shown in Figure 4 is mounted in the drum housing. The drum carries four work spindles of which two are shown in Figure 4. Surrounding the drum at one end thereof is a drive gear ring 74 whereby indexing takes place through a mechanism which is not shown in the drawing.

Each work spindle shown is of the kind intended to accept bar stock which is fed from the rear of the machine (that is from the drum housing end). The two of the spindles are shown in different positions respectively. Each spindle includes an outer rotating part 75 carried in bearings 76, 77 in the indexable drum 14. Within this is a sliding tube 78 which is actuated by a toggle action mechanism indicated generally at 79, the tube 78 having at one end the collet which grips the bar stock. Within the sliding tube is a feed tube 81 having at one end a gripper which ensures forward movement of the bar stock at appropriate intervals. The sliding tube 78 and associated collet may be brought into a wedging position to grip the bar stock so that an appropriate length thereof extends out of the operative end of the work spindle.

Other forms of chucking arrangement may be adopted and the toggle mechanism and chucking mechanisms may be actuated hydraulically or mechanically in accordance with known practice.

To drive the outer part 75 of each work spindle there are independent sets of drive gears associated with the spindles respectively. Figure 4 shows the drive arrangement for all of the four work spindles of the machine. The drive to the spindle shown at the top of Figure 4 is indicated below the centre line of that spindle whereas the drive to the adjacent spindle not shown in the drawing is indicated above the centre line. Similarly the work spindle shown at the bottom of Figure 4 has its drive arrangement shown above the centre line thereof whereas that for the adjacent spindle which is not shown is below the centre line.

Referring first to the spindle shown at the top of Figure 4 the drive mechanism includes a gear ring 82 meshing with a gear 83 carried on a ring 84 which in turn is engaged through a spline with the outermost shaft 57 of the concentric tubular shafts already referred to. This assembly is mounted in bearings 85 which are carried in the indexable drum 14. The ring 84 carries a locking ring 86 which engages the inner races of the bearings 85 to hold them in place and in turn the bearings 85 are located by means of a ring 87 secured to the drum 14 by means of bolts 88.

The adjacent work spindle is seen to be driven through a gear ring 89 carried thereon and this meshes with a gear 91 mounted on a ring 92 which in turn is splined to the next one of the concentric tubular shafts 58. Bearings 93 mount the ring 92 in similar manner to that associated with the shaft 57. On the work spindle 75 at the top of Figure 4 there is shown a locking ring 94 which locks the gear ring 82 or 89 as appropriate in place and this also locks in place the bearings 77 for the spindle part 75.

A similar drive arrangement is used for the lower shaft shown in Figure 4. Below the centre line there is shown a gear ring 95 which meshes with a gear 96 carried on the next inner one of the concentric shafts 59 through the ring 97. Similar bearing arrangements and locking rings are used to those of the work spindle shown at the top of Figure 4.

The work spindle indicated above the centre line of the lower shaft in Figure 4 involves a gear ring 98 meshing with a gear 99 carried through a ring 101 on the innermost of the concentric shafts 61. Again appropriate bearing arrangements are used.

As can be seen from Figure 4 the driving gears 83, 91, 96 and 99 are offset so as to be carried on their respective rings 84, 92, 97, 101 which are in turn splined to the protruding ends of the four concentric shafts 57, 58, 59, 61.

By means of this arrangement it is possible to drive the four work spindles of the machine at different speeds through the respective independent drive mechanism. The arrangement is however such that all spindle drives remain engaged during indexing so that positional relationship of the work spindles is not lost during indexing and numerical control of the lathe is thus facilitated. Declutching such as is usually necessary in multi-spindle machines is therefore not necessary.

The work spindles can be driven at different speeds so that different types of machining operation can be carried out simultaneously on the respective spindles. Thus one or more components may be produced for each complete cycle of the machine.

Although the machine described utilises bar stock individual work blanks may be loaded at one or more positions.

By using variable speed drive motors 25, 26, 27, 28 the necessity for change speed mechanisms including gearing is avoided.

Different numbers of work spindles can be used if required.

## Claims

1. A multi-spindle lathe having an indexable drum (14), a plurality of work spindles (10—13) rotatably mounted in the drum (14), and independent drive means, including a drive motor (25—28), for each of the spindles, said drive motors being connected to the respective spindles (10—13) through independent drive mechanisms, characterized in that the drive motors (25—28) are located at the opposite end of the lathe from the drum (14).

2. A multi-spindle lathe as claimed in claim 1 characterized in that said independent drive mechanisms include drive shafts (57, 58, 59, 61) which span the space between said drum (14) and a drive housing (9) at said opposite end of the lathe, said drive shafts (57, 58, 59, 61) extending concentrically of one another.

3. A multi-spindle lathe as claimed in claim 2, characterized in that said concentric drive shafts (57, 58, 59, 61) are each of tubular form, the outermost drive shaft (57) extending within a stationary shroud tube (71) and the innermost drive shaft (61) having extending therethrough control connections.

4. A multi-spindle lathe as claimed in claim 3, characterized in that said control connections, in the form of electrical leads and/or hydraulic tubing, extend within a tube (72) passing through said innermost shaft (61).

5. A multi-spindle lathe as claimed in any one of the preceding claims, characterized in that the drive connection between each work spindle and its respective drive motor remains engaged during indexing of said drum (14) whereby positional relationship between the work spindles is not lost during indexing.

## Patentansprüche

1. Mehrspindeldrehbank mit einer schaltbaren Trommel (14), einer Mehrzahl von drehbar in einer Trommel (14) angebrachten Arbeitsspindeln (10—13) und unabhängigen Antriebseinrichtungen mit einem Antriebsmotor (25—28) für jede der Spindeln, wobei die Antriebsmotoren mit den entsprechenden Spindeln (10—13) durch unabhängige Antriebseinrichtungen verbunden sind, dadurch gekennzeichnet, daß die Antriebsmotoren (25—28) an dem von der Trommel (14) entgegengesetzten Ende der Drehbank angeordnet sind.

2. Mehrspindeldrehbank nach Anspruch 1, dadurch gekennzeichnet, daß die unabhängigen Antriebseinrichtungen Antriebswellen (57, 58, 59, 61) aufweisen, die den Abstand zwischen der Trommel (14) und einem Antriebsgehäuse (9) an dem entgegengesetzten Ende der Drehbank überbrücken, wobei sich die Antriebswellen (57, 58, 59, 61) konzentrisch zueinander erstrecken.

3. Mehrspindeldrehbank nach Anspruch 2, dadurch gekennzeichnet, daß jede der konzentrischen Antriebswellen (57, 58, 59, 61) von röhrenförmiger Form ist, daß sich die äußerste Antriebswelle (57) innerhalb eines stationären Trennrohres (71) erstreckt und daß die innerste Antriebswelle (61) Steuerverbindungen aufweist, die sich durch diese erstrecken.

4. Mehrspindeldrehbank nach Anspruch 3, dadurch gekennzeichnet, daß sich die Steuerverbindungen in der Form von elektrischen Drähten und/oder Hydraulikschläuchen innerhalb eines Rohres (72) erstrecken, das durch die innerste Welle (61) geht.

5. Mehrspindeldrehbank nach einem der vorhergehenden Ansprüche, dadurch gekennzeichnet, daß die Antriebsverbindung zwischen jeder Arbeitsspindel und ihrem entsprechenden Antriebsmotor während des Schaltens der Trommel (14) in Eingriff bleibt, wodurch die Positionszuordnung zwischen den Spindeln während des Schaltens nicht verlorengeht.

## Revendications

1. Tour multibroches ayant un tambour (14) qui peut être positionné, plusieurs broches porte-pièces (10—13) montées afin qu'elles puissent tourner dans le tambour (14), et des dispositifs indépendants d'entraînement, comprenant un moteur d'entraînement (25—28) pour chacune des broches, les moteurs d'entraînement étant raccordés aux broches respectives (10—13) par des mécanismes indépendants de transmission, caractérisé en ce que les moteurs d'entraînement (25—28) sont placés à l'extrémité du tour opposée au tambour (14).

2. Tour multibroches selon la revendication 1, caractérisé en ce que les mécanismes indépendants de transmission comportent des arbres d'entraînement (57, 58, 59, 61) qui sont placés dans l'espace compris entre le tambour (14) et le boîtier (9) de transmission à l'extrémité opposée du tour, les arbres d'entraînement (57, 58, 59, 61) étant concentriques les uns aux autres.

3. Tour multibroches selon la revendication 2, caractérisé en ce que les arbres concentriques d'entraînement (57, 58, 59, 61) ont chacun une forme tubulaire, l'arbre externe (57) étant disposé dans un tube fixe de protection (71) et l'arbre interne (61) ayant des connexions de commande qui passent à l'intérieur:

4. Tour multibroches selon la revendication 3, caractérisé en ce que les connexions de commande, sous forme de fils électriques et/ou de tubes hydrauliques, sont disposées dans un tube (72) passant dans l'arbre interne (61).

5. Tour multibroches selon l'une quelconque des revendications précédentes, caractérisé en ce que la connexion d'entraînement formée entre chaque broche porte-pièces et le moteur respectif d'entraînement reste en prise pendant le positionnement du tambour (14) si bien que les positions relatives des broches porte-pièces ne sont pas perdues pendant le positionnement.

FIG. I.

FIG.2.

FIG.3.

FIG. 4.

0 113 997

FIG.5